# EUROPÄISCHE PATENTANMELDUNG

(11) **EP 1 260 302 A1**
(43) Veröffentlichungstag der Anmeldung: **27.11.2002**
(21) Anmeldenummer: 02100471.8
(22) Anmeldetag: 10.05.2002
(51) Int. Cl.: B23K 26/18, B23K 26/32, B23K 1/005, B23K 1/19

(54) **Verfahren zur Laserbearbeitung, insbesondere zum Laserlöten und/oder Laserschweissen, von Teilen mit hoher Reflektivität**

(30) Priorität: 16.05.2001 DE 10123852
(71) Anmelder: SIEMENS AKTIENGESELLSCHAFT, 80333 München (DE)
(72) Erfinder: Scherer, Clemens, 82205 Gilching (DE); Schlenk, Wolfgang, Dr., 91058 Erlangen (DE)

(57) **Zusammenfassung**

Auf der stark reflektierenden Oberfläche eines Teils (10) wird eine Folie (11) angeordnet, welche für die Laserstrahlung eine geringere Reflektivität aufweist, als das Teil (10) selbst und welche für die Laserstrahlung eine geringe Transmission aufweist. Ein auf die Folie (11) gerichteter Laserstrahl (15) bewirkt dann an dieser Stelle eine lokale Erwärmung des Teiles (10), die zum lokalen Härten oder auch zum Herstellen einer Lötverbindung und/oder Schweißverbindung mit einem zweiten Teil ausgenutzt werden kann.

## Beschreibung

Die Verbindung der Anschlussbeinchen von Halbleiterbausteinen mit den zugehörigen Anschlußpads einer Leiterplatte kann beispielsweise durch Laserlöten oder Laserschweißen vorgenommen werden. Diese Art der Verbindung hat sich insbesondere in solchen Fällen bewährt, bei denen die zu verbindenden Teile eine Oberfläche besitzen, welche die Energie der Laserstrahlung gut absorbiert. Die resultierende Erwärmung bewirkt dann die erwünschte Lötverbindung oder Schweißverbindung. In vielen Anwendungen weist die Oberfläche der zu verbindenden Teile jedoch eine hohe Reflektivität für die Laserstrahlung auf, so dass ohne zusätzliche Maßnahmen keine verlässlichen Lötverbindungen oder Schweißverbindungen erzielt werden können. Die gleiche Problematik ergibt sich auch bei anderen Arten der Laserbearbeitung von Teilen mit hoher Reflektivität, wie z.B. beim lokalen Härten oder Umschmelzen von Metalloberflächen mit Hilfe eines Laserstrahls.

Zur Verbindung von Metallteilen mit hoher Reflektivität durch Laserlöten oder Laserschweißen ist es aus der US-A-5 274 210 bereits bekannt, auf eines der Metallteile eine Farbe oder Tinte aufzubringen, die eine geringere Reflektivität aufweist als dieses Metallteil selbst. Die entsprechend erhöhte Absorption der Energie der Laserstrahlung ermöglicht dann eine Lötverbindung oder Schweißverbindung.

Aus der US-A-4 023 005, der US-A-4 697 061 oder der US-A-5 008 512 ist es auch bereits bekannt, auf Metallteile mit stark reflektierender Oberfläche eine Beschichtung aus einem Metall aufzubringen, das eine geringere Reflektivität aufweist als die Metallteile selbst. Auch hier wird dann durch die höhere Absorption der Laserstrahlung die Herstellung von Löt- oder Schweißverbindungen ermöglicht.

Eine weitere Möglichkeit, die eine hohe Reflektivität aufweisenden Anschlussbeinchen von Halbleiterbausteinen mit den zugehörigen Anschlußpads einer Leiterplatte durch Laserlöten zu verbinden, ist aus der US-A-5 021 630 bekannt. Die Anschlussbeinchen werden hier mit einer Glasplatte gegen die Anschlußpads gedrückt, wobei der Laserstrahl an der jeweiligen Verbindungsstelle auf die Oberfläche der Glasplatte gerichtet wird. Das Material der Glasplatte und die Wellenlänge des Laserstrahls sind dabei so aufeinander abgestimmt, dass die Umwandlung der Energie der Laserstrahlung in Wärme das Aufschmelzen des Lotes an den Verbindungsstellen bewirkt.

Der in den Patentansprüchen 1 und 2 angegebenen Erfindung liegt das Problem zugrunde, mit einfachen Mitteln die Erwärmung von Teilen mit hoher Reflektivität durch Laserstrahlen zu ermöglichen. Insbesondere soll auch die Verbindung von Metallteilen durch Weichlöten, Hartlöten und/oder Schweißen mit Hilfe eines Laserstrahls erleichtert werden.

Der Erfindung liegt die Erkenntnis zugrunde, dass das Auflegen einer Folie auf die stark reflektierende Oberfläche eines Teiles eine lokale Erwärmung dieses Teils mit Hilfe eines Laserstrahls ermöglicht, sofern die Folie eine geringere Reflektivität aufweist als das Teil selbst und auch eine geringe Transmission aufweist. Durch die erhöhte Absorption der Laserstrahlung in der Folie können somit auch Teile mit einer die Laserstrahlung stark reflektierenden Oberfläche lokal erwärmt werden. Hierdurch wird dann beispielsweise das lokale oder das flächige Härten von Metallteilen sowie das Umlegieren oder Einlegieren mit Hilfe eines Laserstrahls ermöglicht. Beim Verbinden von Metallteilen mit hoher Reflektivität mit Hilfe eines Laserstrahls ermöglicht die Folie die Erzeugung von zuverlässigen Lötverbindungen oder Schweißverbindungen, wobei zusätzlich auch noch eine Kombination von Löten und Schweißen möglich ist. Beim Löten und Schweißen sind folgende Varianten möglich: Stoß-, Überlapp-, Linien-, Einzel-, Serien-Lötung oder -Schweißung.

Die genauen physikalischen Effekte, die die Folie bewirkt, sind noch nicht vollständig geklärt. Obwohl die Folie beim Auftreffen des Laserstrahls an dieser Stelle verdampft, ergibt sich eine ausreichende lokale Erwärmung. Die an den jeweiligen Bearbeitungsstellen perforierte Folie kann anschließend problemlos abgehoben werden, wobei auf der Oberfläche allenfalls geringfügige Rückstände verbleiben.

Aus der US-A-5 055 652 ist es bereits bekannt, bei der Verbindung der Anschlussbeinchen eines Halbleiterbausteins mit den zugehörigen Anschlußpads einer Leiterplatte durch Laserlöten ein Band einzusetzen, welches auf den Anschlussbeinchen angeordnet ist. Dieses mit den Anschlussbeinchen verbundene Band hat die Aufgabe, die Anschlussbeinchen zu stützen und ihre Lage zu fixieren. Das Material des Bandes und die Wellenlänge der Laserstrahlung sind dabei so aufeinander abgestimmt, dass der Laserstrahl nicht absorbiert sondern transmittiert wird. Für das Laserlöten von Teilen mit hoher Reflektivität ist das bekannte Verfahren also nicht geeignet.

Bevorzugte Ausgestaltungen der Erfindung gehen aus den Ansprüche 3 bis 17 hervor.

Die Ausgestaltungen nach den Ansprüchen 3 und 4 ermöglichen bereits in den meisten Anwendungsfällen recht gute Ergebnisse bei der Laserbearbeitung oder beim Laserlöten und/oder Laserschweißen. Die Weiterbildungen nach den Ansprüchen 5 und 6 mit einem Absorptionsgrad der Folie von mindestens 60 % bzw. mindestens 90 % bewirken eine weitere Verbesserung der lokalen Erwärmung mit Hilfe eines Laserstrahls.

Die Ausgestaltung nach Anspruch 7 mit einer Folie aus einem Nichtmetall, insbesondere Kunststoff und/oder Papier, ermöglicht eine besonders einfache und wirtschaftliche Durchführung des Verfahrens. Zudem hat eine solche Folie eine besonders starke Reißfestigkeit welche beim Auf- und Abrollen der Folie unter ggf. hoher Geschwindigkeit und Spannung von besonders großem Vorteil ist. Es haben sich dabei Folien aus Polyimid gemäß Anspruch 8 besonders gut bewährt.

Die Weiterbildung nach Anspruch 9 ermöglicht eine einfache und effektive Steigerung des Absorptionsgrades der Folie für die Laserstrahlung. Die Verwendung von schwarzen Pigmenten als die Absorption erhöhenden Zusatzstoffe gemäß Anspruch 9 hat sich dabei besonders gut bewährt.

Die Ausgestaltung nach Anspruch 11 mit der Verwendung einer Folie in Form eines Bandes ermöglicht mit einfachen Mitteln eine Automatisierung der geschilderten Verfahren.

Die Ausgestaltung nach Anspruch 12 gibt einen besonders günstigen Bereich für die Stärke der Folien an.

Gemäß Anspruch 13 kann die Effektivität der Laserbearbeitung durch die Verwendung einer bandförmigen Folie, die sich über mehrere Bearbeitungsstellen erstreckt, weiter gesteigert werden.

Die Weiterbildung nach Anspruch 14 ermöglicht auf einfache Weise eine automatische Zufuhr der bandförmigen Folie zu den jeweiligen Bearbeitungsstellen.

Die Ausgestaltung nach Anspruch 15 gewährleistet eine sichere Anlage der Folie auf dem jeweils zu bearbeitenden Teil. Außerdem kann der Niederhalter beim Laserlöten und/oder Laserschweißen zur Erzeugung eines Anpressdrucks der miteinander zu verbindenden Teile herangezogen werden.

In den Ansprüchen 16 und 17 sind Laser angegeben, die sich beim Einsatz einer Folie zur Erhöhung der Absorption der Laserstrahlung besonders gut bewährt haben.

Im folgenden werden Ausführungsbeispiele der Erfindung anhand der Zeichnungen näher erläutert.
Es zeigen
- Figur 1: das Grundprinzip der Bearbeitung von Teilen mit hoher Reflektivität mit Hilfe eines Laserstrahls,
- Figur 2: das Grundprinzip des Verbindens von Metallteilen mit hoher Reflektivität mit Hilfe eines Laserstrahls und
- Figur 3: das Grundprinzip des Verbindens der Anschlussbeinchen eines Halbleiterbausteins mit den zugehörigen Anschlußpads einer Leiterplatte durch Laserlöten und/oder Laserschweißen.

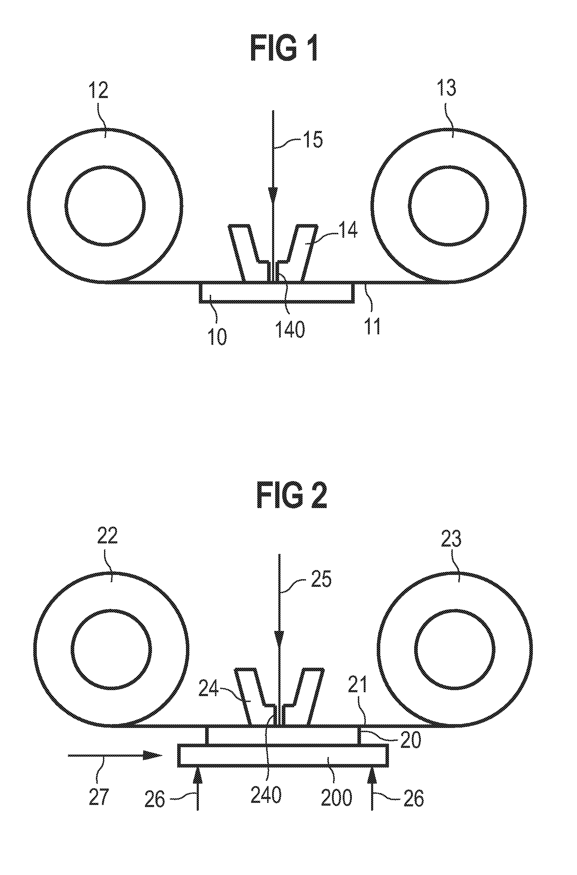

Figur 1 zeigt in stark vereinfachter schematischer Darstellung die lokale Erwärmung eines Teils 10 mit Hilfe eines Laserstrahls 15. Das beispielsweise aus Metall bestehende Teil 10 besitzt eine Oberfläche mit hoher Reflektivität, auf welcher eine bandförmige Folie 11 angeordnet wird, welche die Energie des Laserstrahls 15 gut absorbiert. Bei Erzeugung des Laserstrahls 15 durch einen Nd:YAG-Laser mit einer Wellenlänge von 1,064 µm oder durch einen CO₂-Laser mit einer Wellenlänge von 10,6 µm wird diese Absorption beispielsweise durch eine 25 µm starke Folie 11 aus Polyimid erreicht, die durch die Beimengung von Additiven schwarz gefärbt ist.

Die bandförmige Folie 11 wird von einer Vorratsrolle 12 schrittweise abgespult und nach der Bearbeitung durch den Laserstrahl 15 von einer Aufwickelrolle 13 aufgenommen. Ein Niederhalter 14 drückt an der vorgesehenen Bearbeitungsstelle die bandförmige Folie 11 gegen das Teil 10, wobei der Durchtritt des Laserstrahls 15 durch eine Ausnehmung 140 des Niederhalters 14 ermöglicht wird.

Durch die Anwesenheit der bandförmigen Folie 11 bewirkt der Laserstrahl 15 eine lokale Erwärmung des Teils 10. Die bandförmige Folie 11 verdampft beim Auftreffen des Laserstrahls 15 an dieser Stelle, d.h. sie wird an der Bearbeitungsstelle perforiert. Für den nächsten Bearbeitungsvorgang kann dann durch Drehen der Aufwickelrolle 13 unverbrauchte bandförmige Folie 14 in den Bearbeitungsbereich transportiert werden.

Das vorstehend geschilderte Prinzip der Laserbearbeitung kann beispielsweise für das lokale Härten des Teils 10 bzw. für das Umlegieren oder mit entsprechenden Zusatzstoffen das Einlegieren mit Hilfe des Laserstrahls 15 eingesetzt werden.

Figur 2 zeigt in stark vereinfachter schematischer Darstellung das Verbinden von zwei Metallteilen 20 und 200 durch Löten und/oder Schweißen mit Hilfe eines Laserstrahls 25. Das Metallteil 20 besitzt eine Oberfläche mit hoher Reflektivität, auf welcher eine bandförmige Folie 21 angeordnet wird, welche die gleichen Eigenschaften hat wie die im Zusammenhang mit Figur 1 beschriebene bandförmige Folie 11.

Die bandförmige Folie 21 wird von einer Vorratsrolle 22 schrittweise abgespult und nach der Bearbeitungsstelle von einer Aufwickelrolle 23 aufgenommen. Die beiden miteinander zu verbindenden Metallteile 20 und 200 werden durch einen in Figur 2 nicht dargestellten Transportmechanismus in Richtung des Pfeiles 27 zugeführt und dann in Richtung der Pfeile 26 gegen einen auf der bandförmigen Folie 21 angeordneten Niederhalter 24 gedrückt. Der Durchtritt des Laserstrahls 25 wird dabei durch eine entsprechende Ausnehmung 240 des Niederhalters 24 ermöglicht.

Durch die Anwesenheit der bandförmigen Folie 21 bewirkt der Laserstrahl 25 an der vorgesehenen Verbindungsstelle eine Erwärmung der Metallteile 20 und 200, die ihrerseits zu einer Verbindung durch Löten und/oder Schweißen führt. Im Falle einer Lötverbindung muss natürlich das erforderliche Lot zwischen den beiden Metallteilen 20 und 200 beispielsweise in Form einer Oberflächenschicht oder einer Lotfolie angeordnet werden. Die bandförmige Folie 21 verdampft beim Auftreffen des Laserstrahls 25, d.h. sie wird an der Verbindungsstelle perforiert. Für den nächsten Verbindungsvorgang kann dann durch Drehen der Aufwickelrolle 23 unverbrauchte bandförmige Folie 21 unter den Niederhalter 24 transportiert werden.

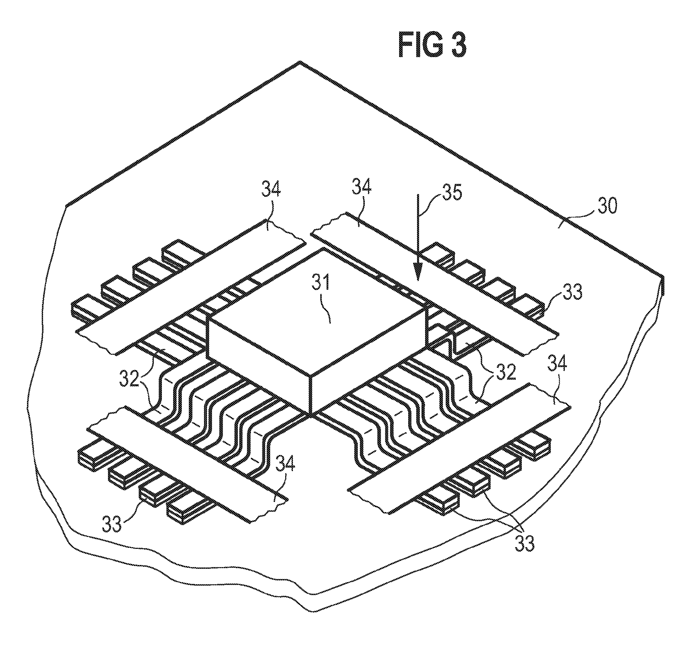

Figur 3 zeigt in stark vereinfachter perspektivischer Darstellung das Grundprinzip des Verbindens der Anschlussbeinchen 32 eines Halbleiterbausteins oder elektronischen Bauelements 31 mit den zugehörigen Anschlußpads 33 einer Leiterplatte 30 durch Laserlöten und/oder Laserschweißen. Die Anschlussbeinchen 32 besitzen eine Oberfläche mit hoher Reflektivität, d.h. eine unmittelbare Verbindung von Anschlussbeinchen 32 und Anschlußpads 33 mit Hilfe eines Laserstrahls 35 ist nur schwer möglich, z.B. über längere Einwirkzeiten und/oder höhere Laserenergie. Aus diesem Grund werden insgesamt vier bandförmige Folien 34 eingesetzt, die sich jeweils über sämtliche Verbindungsstellen einer Reihe Anschlussbeinchen 32 erstrecken. Die bandförmigen Folien 34 besitzen die gleichen Eigenschaften wie die im Zusammenhang mit den Figuren 1 und 2 geschilderten bandförmigen Folien 11 und 21.

Die bandförmige Folie 34 wird über in Figur 3 nicht dargestellte Niederhalter gegen die Anschlussbeinchen 32 gedrückt, wodurch die Anschlussbeinchen 32 ihrerseits gegen die Anschlußpads 33 der Leiterplatte 30 gedrückt werden.

Durch die Anwesenheit der bandförmigen Folie 34 bewirkt der Laserstrahl 35 an der vorgesehenen Verbindungsstelle eine Erwärmung von Anschlussbeinchen 32 und Anschlußpad 33, die ihrerseits zu einer Verbindung durch Löten und/oder Schweißen führt. Im Falle einer Lötverbindung muss das erforderliche Lot zwischen Anschlussbeinchen 32 und Anschlußpad 33 bereitgestellt werden, beispielsweise durch eine galvanisch aufgebrachte Zinn oder Zinn-Blei-Schicht auf den Anschlussbeinchen 32 oder auf den Anschlußpads 33 oder auf beiden Teilen.

Die Verbindung von Anschlussbeinchen 32 und Anschlußpads 33 mit Hilfe des Laserstrahls 35 ist in Figur 3 für ein Anschlussbeinchen 32 der hinteren Reihe aufgezeigt. Die anderen Verbindungen können durch eine entsprechende Ablenkung des Laserstrahls 35 oder durch den gleichzeitigen Einsatz mehrerer Laserstrahlen 35 hergestellt werden. Die bandförmigen Folien 34 werden beim Auftreffen des Laserstrahls 35 an diesen Stellen schlagartig verdampft, d.h. sie werden an den Verbindungsstellen perforiert. Die Zufuhr unverbrauchter bandförmiger Folie 34 für den nächsten Verbindungsvorgang kann dann wieder über Vorratsrollen und Aufwickelrollen vorgenommen werden, so wie es vorstehend im Zusammenhang mit den Figuren 1 und 2 beschrieben werden.

Werden die Anschlussbeinchen 32 durch Hartlöten oder Schweißen mit den zugehörigen Anschlußpads 33 verbunden, so kann die Qualität dieser Verbindungen auch durch nachfolgende Lötprozesse nicht mehr beeinträchtigt werden. Im Falle des Hartlötens werden die Anschlussbeinchen 32 beispielsweise mit einem eutektischen Silber-Kupfer-Lot oder mit einem Silber-Phosphor-Lot überzogen.

## Patentansprüche

1. Verfahren zum Bearbeiten von Teilen (10) mit hoher Reflektivität mit Hilfe eines Laserstrahls (15) mit folgenden Schritten:
- auf dem zu bearbeitenden Teil (10) wird eine Folie (11) angeordnet, welche für die Laserstrahlung eine geringere Reflektivität aufweist als das zu bearbeitende Teil (10) und welche für die Laserstrahlung eine geringe Trans mission aufweist;
- der Laserstrahl (15) wird derart auf die Folie (11) gerichtet, dass das zu bearbeitende Teil (10) lokal erwärmt wird.

2. Verfahren zum Verbinden von zwei Metallteilen (20, 200; 32, 33) mit hoher Reflektivität durch Löten und/oder Schweißen mit Hilfe eines Laserstrahls (25; 35) mit folgenden Schritten:
- auf dem ersten Metallteil (20; 32) wird eine Folie (21; 34) angeordnet, welche für die Laserstrahlung eine geringere Reflektivität aufweist, als die zu verbindenden Metallteile (20, 200; 32, 33) und welche für die Laserstrahlung eine geringe Transmission aufweist;
- der Laserstrahl (25; 35) wird an der Verbindungsstelle derart auf die Folie (21; 34) gerichtet, dass die resultierende Erwärmung die Verbindung des ersten Metallteils (20; 32) mit dem zweiten Metallteil (200, 33) bewirkt.

3. Verfahren nach Anspruch 1, **dadurch gekennzeichnet, dass** eine Folie (11) verwendet wird, deren Absorptionsgrad für die Laserstrahlung mindestens 10 % höher ist, als der Absorptionsgrad des zu bearbeitenden Teils (10) im Ausgangszustand.

4. Verfahren nach Anspruch 2, **dadurch gekennzeichnet, dass** eine Folie (21; 34) verwendet wird, deren Absorptionsgrad für die Laserstrahlung mindestens 10 % höher ist, als der Absorptionsgrad der zu verbindenden Metallteile (20, 200; 32, 33).

5. Verfahren nach einem der vorhergehenden Ansprüche, **dadurch gekennzeichnet, dass** eine Folie (11; 21; 34) verwendet wird, deren Absorptionsgrad für die Laserstrahlung mindestens 60 % beträgt.

6. Verfahren nach einem der Ansprüche 1 bis 4, **dadurch gekennzeichnet, dass** eine Folie (11; 21; 34) verwendet wird, deren Absorptionsgrad für die Laserstrahlung mindestens 90 % beträgt.

7. Verfahren nach einem der vorhergehenden Ansprüche, **dadurch gekennzeichnet, dass** eine Folie (11; 21; 34) aus Nichtmetall, insbesondere aus Kunststoff und/oder Papier, verwendet wird.

8. Verfahren nach Anspruch 7, **dadurch gekennzeichnet, dass** eine Folie (11; 21; 34) aus Polyimid verwendet wird.

9. Verfahren nach Anspruch 7 oder 8, **dadurch gekennzeichnet, dass** dem Kunststoff Zusatzstoffe beigemengt werden, welche den Absorptionsgrad für Laserstrahlung mit der jeweils gewählten Wellenlänge erhöhen.

10. Verfahren nach Anspruch 9, **dadurch gekennzeichnet, dass** dem Kunststoff schwarze Pigmente als Zusatzstoffe beigemengt werden.

11. Verfahren nach einem der vorhergehenden Ansprüche, **gekennzeichnet durch** die Verwendung einer Folie (11; 21; 34) in Form eines Bandes.

12. Verfahren nach einem der vorhergehenden Ansprüche, **gekennzeichnet durch** die Verwendung einer Folie (11; 21; 34) mit einer Stärke zwischen 5 µm und 30 µm.

13. Verfahren nach Anspruch 11 oder 12, **dadurch gekennzeichnet, dass** eine Folie (34) in Form eines Bandes verwendet wird, das sich über mehrere Bearbeitungsstellen oder Verbindungsstellen erstreckt.

14. Verfahren nach einem der Ansprüche 11 bis 13, **dadurch gekennzeichnet, dass** eine Folie (11; 21) in Form eines Bandes verwendet wird, das von einer Vorratsrolle (12; 22) abgespult wird

15. Verfahren nach Anspruch 14,. **dadurch gekennzeichnet, dass** die Folie (11; 21) in Form eines Bandes nach den Bearbeitungsstellen oder Verbindungsstellen von einer Aufwickelrolle (13; 23) aufgenommen wird.

16. Verfahren nach einem der vorhergehenden Ansprüche, **dadurch gekennzeichnet, dass** der Folie (11; 21) ein Niederhalter (14; 24) zugeordnet wird, der mindestens eine Ausnehmung (140; 240) für den Durchtritt des Laserstrahls (15; 25) aufweist.

17. Verfahren nach einem der vorhergehenden Ansprüche, **dadurch gekennzeichnet, dass** zur Erzeugung des Laserstrahls (15; 25; 35) ein Nd: YAG-Laser mit einer Wellenlänge von 1,064 µm verwendet wird.

18. Verfahren nach einem der vorhergehenden Ansprüche 1 bis 15, **dadurch gekennzeichnet, dass** zur Erzeugung des Laserstrahls (15; 25; 35) ein CO₂-Laser mit einer Wellenlänge von 10,6 µm verwendet wird.
